# EUROPEAN PATENT SPECIFICATION

(11) **EP 2 072 337 B1**
(45) Date of publication and mention of the grant of the patent: **25.06.2014**
(21) Application number: 08155237.4
(22) Date of filing: 25.04.2008
(51) Int. Cl.: B60R 3/00, B60R 3/02

(54) **A Vehicle Step with a Hinged Pedestal Mount**
Fahrzeugstufe mit Scharnierständer
Marche pour véhicule à support de piédestal à charnière

(30) Priority: 21.12.2007 US 962625
(43) Date of publication of application: 24.06.2009
(73) Proprietor: Ford Global Technologies, LLC, Dearborn, MI 48126 (US); MULTIMATIC INC., Markham, Ontario L3R 5E5 (CA)
(72) Inventor: VanBelle, Michael, Ypsilanti, 48197 (US); Caballero, Louis, Saline, MI 48176 (US); Sauerwein, Sven, Woodbridge Ontario L4L 8Y6 (CA); Barrett, David, Millwall, Essex E14 3WE (GB)
(74) Representative: Messulam, Adam Clive

(56) References cited:
- EP-A1- 0 373 842
- US-A1- 2003 132 595
- US-A1- 2006 202 441
- US-A1- 2007 278 760

## Description

The present invention relates to a step apparatus which may be deployed to allow ready access to a portion of a motor vehicle, such as a pickup box.

Vehicles such as pickup trucks and sport utility vehicles frequently utilize large tyres and wheels and high ground clearance, so as to enable such vehicles to negotiate more rugged terrain and difficult road surfaces such as those piled with snow and loose soil. Although high ground clearance has the benefit of promoting vehicle mobility, a drawback is inherent with such construction, insofar as high ground clearance renders access to vehicle load carrying structures such as a pickup box, utility body, or roof rack, a difficult proposition. Various designers have attempted to provide foldaway steps which would allow vehicle operators to gain access to a pickup box or other vehicle body. Such foldaway steps have met with mixed success, and one reason for this shortfall is shown in US 6,641,158, which discloses a step having a mechanism which actually lowers the height of the step when the step is moved from its stowed position to its deployed position. This lowering of height is undesirable because it partially defeats the purpose for the step by placing the user at less of an advantage than would be the case were the step to be moved upwardly as it is moved to its deployed position. One potential solution to this problem is solved by Us 2007/278760, though the implementation does not provide a step that may be comfortably used.

It is an object of this invention to provide a foldable step for a motor vehicle that folds up out of the way when in a stowed position but moves upwardly into the deployed position.

According to a first aspect of the invention there is provided a vehicle step assembly as set forth in claim 1 of the appended claims.

The hinged pedestal may further comprise a stop abutment formed at the first end of the hinged pedestal for preventing rotation of the hinged pedestal outwardly beyond the generally vertical position when the step is in the deployed position.

A portion of the step stringer may abut the base when the hinged pedestal is in the generally horizontal stowed position.

The step may further comprise a step beam having a generally planar tread surface attached to the step stringer, the step beam having a stowed position and a deployed position.

The attitude link may control the relative rotation of the step stringer such that the generally planar tread surface is maintained in a horizontal orientation when the hinged pedestal is in the generally vertical deployed position and angled downwardly and inwardly when the hinged pedestal is in the generally horizontal stowed position.

The step may further comprise a latch mechanism for selectively maintaining the step stringer, the hinged pedestal and the step beam in their respective stowed positions.

The latch mechanism may be operated by a push button.

The push button may extend through the step beam attached to the step stringer.

The base may comprise a plurality of spaced-apart brackets adapted to depend from at least one structural member of a vehicle and the hinged pedestal and the attitude link are mounted upon opposing interior surfaces of the brackets.

The base may be rigidly attached to the at least one structural member.

The energy storage device may be a gas strut.

According to a second aspect of the invention there is provided motor vehicle having a vehicle step constructed in accordance with said first aspect of the invention.

It is an advantage of the present step mechanism that the step is stowed in a tightly tucked position slightly upwardly raked but with the deployed position of the step being at a higher or raised position with respect to the stowed position of the step.

It is another advantage of a step according to the present invention that the step may be mounted on any of the sides of a pickup box such as the longitudinal sides or the corners or even at the rear of the pickup box or an SUV, so as to permit access not only to an interior box, but also to the roof of a vehicle.

It is an advantage of the present step mechanism that the step system is resistant to dirt and debris yet deploys out smoothly for the user.

The invention will now be described by way of example with reference to the accompanying drawing of which:-
Figure 1 is a perspective view of a step system according to the prior art shown in the stowed position;
Figure 2 is a side view partially cut away of the step shown in Figure 1;
Figure 3 is a view similar to that of Figure 2 but showing the step of Figures 1 and 2 in the deployed position;
Figure 4 is a perspective view of the prior art step in its deployed position;
Figure 5 is a perspective view showing a latch mechanism taught by the prior art;
Figure 6 is a perspective view showing a step system according to the present invention in the stowed position with the step member not shown so as to enable an energy storage device to be clearly viewed;
Figure 7 is a cross sectional view along line 7-7 on Figure 6 of the step system according to the present invention in the stowed position showing the energy storage device; and

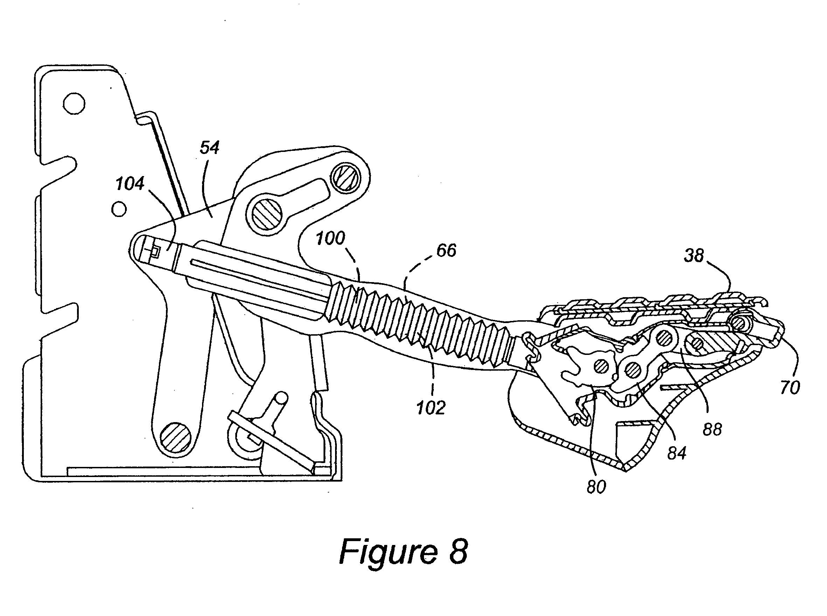

Figure 8 is a cross-sectional view along line 7-7 on Figure 6 showing the energy storage device in the deployed position.

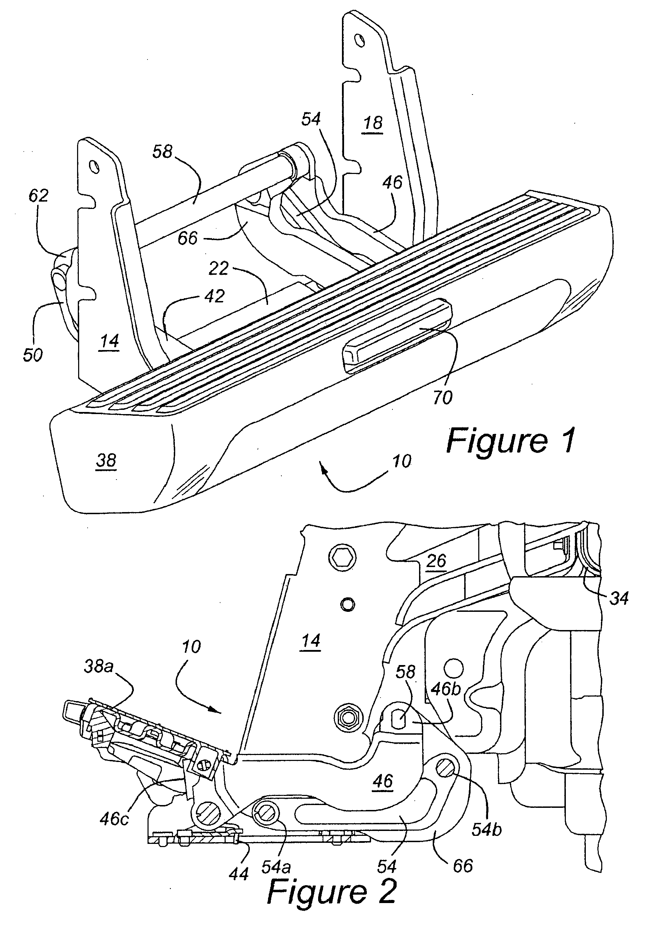

As shown in Figure 1, step assembly 10 is mounted upon a base including left step bracket 14, right step bracket 18 and a tie bar 22 which extends between the left and right step brackets 14 and 18.

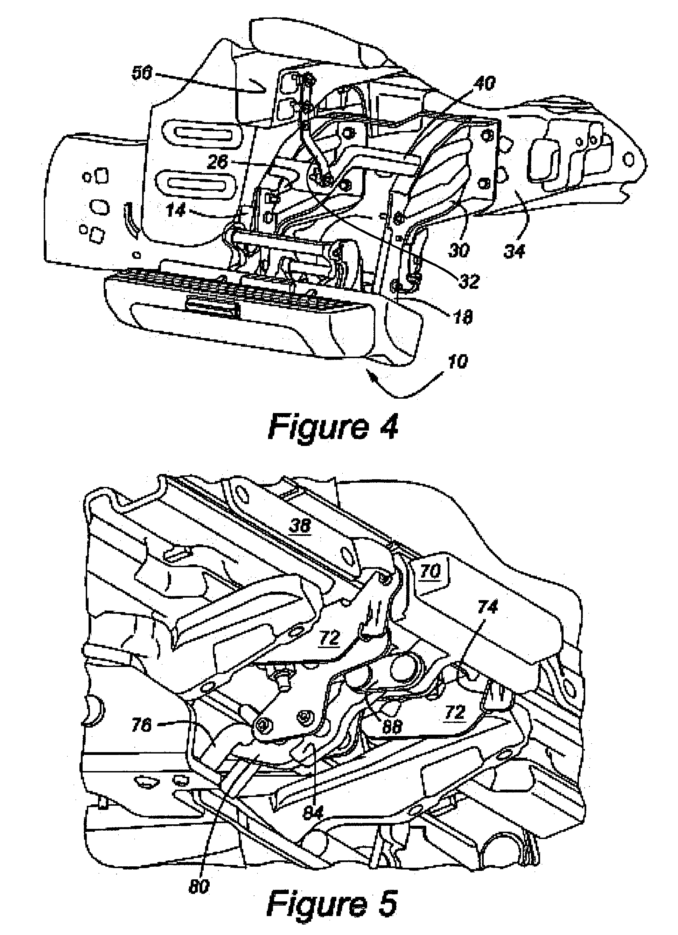

As shown in Figure 4, the left step bracket 14 is attached to a left standoff bracket 26 which in turn is bolted to a frame rail 34 of a vehicle. Similarly, the right step bracket 18 is mounted to right standoff bracket 30, which is also bolted to frame rail 34.

Articulated support member 32, also shown in Figure 4, extends between a structural member 56 and a tie bracket 40, which spans left standoff bracket 26 and right standoff bracket 30.

The support member 32 is articulated to facilitate installation of the present step assembly upon a vehicle.

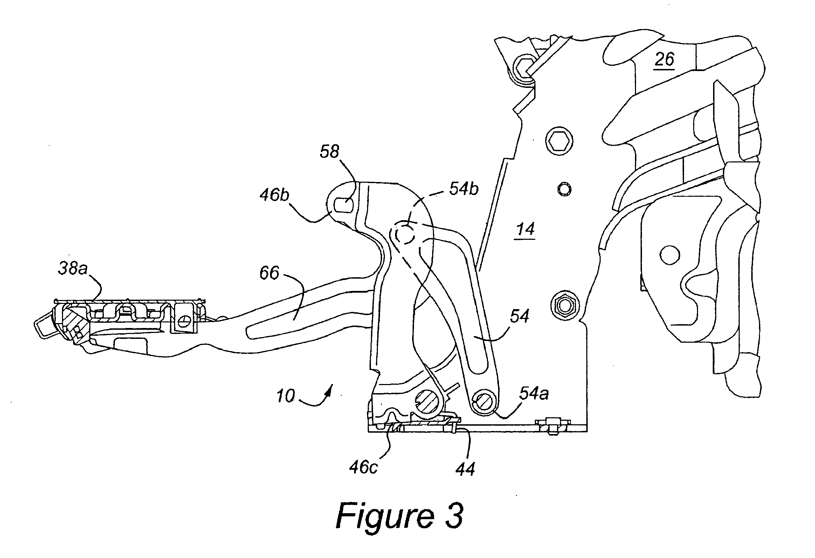

Figure 1 shows a prior art step assembly 10 in its stowed position, with a step beam 38 in a tucked and upwardly angled position. The step beam 38 is attached to left step stringer 62 and right step stringer 66. The right stringer 66 is shown in greater detail Figures 2 and 3 where it can be seen that in Figure 2, the right stringer 66 is in a generally horizontal stowed position in which stringer 66 abuts a lower portion of right step bracket 18 (not shown due to the cutaway of Figure 2).

As seen in Figures 2 and 3, the right step stringer 66 is pivotably attached to a free end 46b of a hinged pedestal 46. A pivot 58 maintains step stringer 66 in rotatable contact with right hinged pedestal 46.

A right attitude link 54 which has a first end 54a mounted to right step bracket 18 and a second end 54b pivotably mounted to right step stringer 66 controls the relative rotation of step stringer 66 such that the generally planar tread surface 38a, which is part of step beam 38, is maintained in the illustrated horizontal orientation of Figure 3 when hinged pedestal 46 is in the generally vertical deployed position of Figure 3.

Conversely, when hinged pedestal 46 is in its generally horizontal stowed position of Figure 2, right attitude link 54 maintains tread surface 38a angled downwardly and inwardly. This assures that step beam 38, including tread surface 38a, is tucked up and out of the way when the present step system is in the stowed position.

By comparing Figures 2 and 3 one may readily ascertain a benefit provided by hinged pedestals 42 and 46. Because these pedestals rotate forwardly and upwardly until the stop abutments, such as 46c shown operationally in Figure 3, contact a base portion of the step, step stringers 62 and 66 are lifted upwardly and outwardly in a simultaneous fashion, which causes step beam 38, including tread surface 38a, to be elevated when it is in its deployed position. This prior art teaching promotes better access to a vehicle with the present step, because it is simply more advantageous for a motorist to be elevated when attempting to reach across a pickup box or other utility body.

The present step system is conveniently operated by a push button latch mechanism which selectively maintains step stringers 62 and 66, hinged pedestals 42 and 46, stringers 62 and 66 and step beam 38 in their respective stowed positions. As shown in Figure 5, the push button 70 is hingedly attached to brackets 72, which are mounted to the underside of step beam 38. Connecting link 88 is pivotably attached to a toggle, 84, which releasably detains latch 80.

A striker 76, which is attached to left and right step brackets 14 and 18, maintains all of the various linkages and components in the stowed position as long as the latch 80 is in its latched/closed position shown in Figure 5.

Depressing push button 70 will cause connecting link 88 and toggle 84 to release latch 80, thereby allowing the step system to be rotated outwardly to its deployed position.

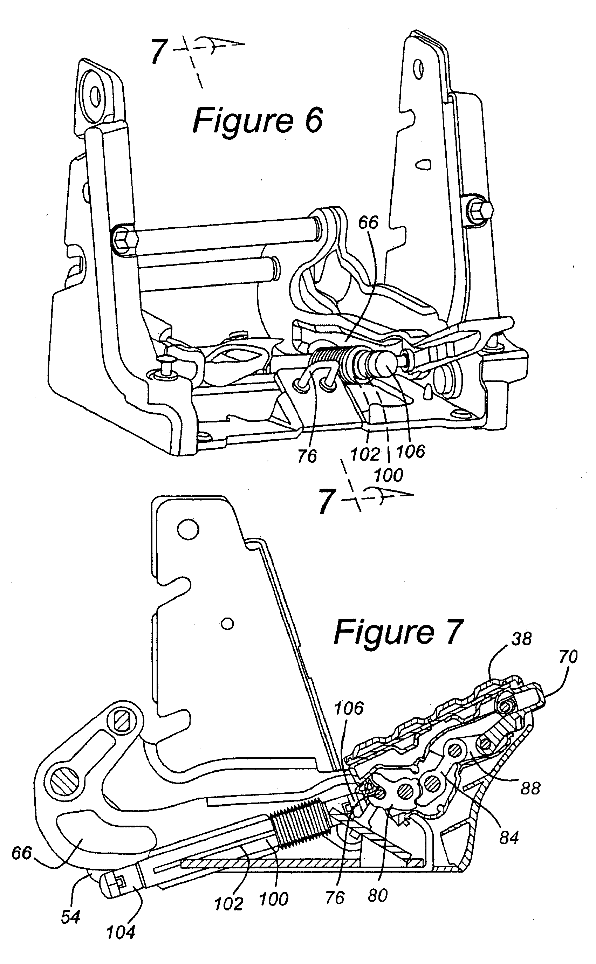

As shown in Figures 6 and 7, a vehicle step system is shown incorporating the present invention wherein an energy storage device 100 such as a gas strut 102 is provided. The energy storage device 100 may be pivotally anchored to at least one of the two attitude links (in Figures 6 and 7 referenced as attitude link 54) at a first end 104 of the energy storage device 100 and pivotally anchored to the step stringer 66 at the second end 106 of the energy storage device 100 so that upon depressing push button 70 (shown in Figure 5), the connecting link 88 (shown in Figure 5) and toggle 84 (shown in Figure 5) will release latch 80 from striker 76, thereby allowing the energy storage device 100 deploy the step stringer 66 member outward and upward so that the step beam 38 is in the deployed position.

The gas strut 102 shown in this embodiment further provides damping as the step beam 38 moves outward to the deployed position.

## Claims

1. A vehicle step assembly (10) comprising
a base (14, 18, 22) adapted for attachment to at least one structural member (34) of a vehicle,
a hinged pedestal (42, 46) rotatable outwardly and upwardly from a generally horizontal stowed position to a generally vertical deployed position and having a first end pivotably mounted to the base (14, 18, 22) and a free end (46b) pivotably attached to a step stringer (62, 66), the step stringer (62, 66) extending generally outwardly from the base (14, 18, 22) and having a stowed position and a deployed position, and
an attitude link (54) having a first end (54a) pivotally mounted to the base (18) and a second end (54b) pivotally mounted to the step stringer (66), and an articulated support member (32) extending between at least one structural member (56) and a tie bracket (40) spanning left and right standoff bracket (26 and 30) mounted to left and right step brackets (14 and 18) respectively.
**characterised by** an energy storage device (100) having first and second ends (104 and 106), the first end (104) of the energy storage device (100) being pivotally mounted to the attitude link (54) and the second end (106) of the energy storage device (100) being pivotally mounted the step stringer (66).

2. A vehicle step as claimed in Claim 1 wherein the hinged pedestal (46) further comprises a stop abutment (46c) formed at the first end of the hinged pedestal (46) for preventing rotation of the hinged pedestal (46) outwardly beyond the generally vertical position when the step is in the deployed position.

3. A vehicle step as claimed in Claim 1 or in Claim 2 wherein a portion of the step stringer (66) abuts the base (18) when the hinged pedestal (46) is in the generally horizontal stowed position.

4. A vehicle step as claimed in any of Claims 1 to 3 wherein the step further comprises a step beam (38) having a generally planar tread surface (38a) attached to the step stringer (62, 66), the step beam (38) having a stowed position and a deployed position.

5. A vehicle step as claimed in Claim 4 wherein the attitude link (54) controls the relative rotation of the step stringer (62, 66) such that the generally planar tread surface (38a) is maintained in a horizontal orientation when the hinged pedestal (42, 46) is in the generally vertical deployed position and angled downwardly and inwardly when the hinged pedestal (42, 46) is in the generally horizontal stowed position.

6. A vehicle step as claimed in any of Claims 1 to 5 wherein the step further comprises a latch mechanism (70) for selectively maintaining the step stringer (62, 66), the hinged pedestal (42, 46) and the step beam (38) in their respective stowed positions.

7. A vehicle step as claimed in any of Claims 1 to 6 wherein the base comprises a plurality of spaced-apart brackets (14, 18) adapted to depend from at least one structural member (34) of a vehicle and the hinged pedestal (42, 46) and the attitude link (54) are mounted upon opposing interior surfaces of the brackets (14, 18).

8. A motor vehicle having a vehicle step assembly (10) as claimed in any of claims 1 to 7.

## Patentansprüche

1. Fahrzeugstufeneinheit (10), umfassend:
eine Basis (14, 18, 22), die sich zum Anbringen an mindestens einem strukturellen Element (34) eines Fahrzeugs eignet;
einen klappbaren Standfuß (42, 46), der aus einer allgemein horizontalen Lagerposition auswärts und aufwärts an eine allgemein vertikale Einsatzposition drehbar ist, und der ein erstes Ende aufweist, das drehbar an der Basis (14, 18, 22) angebracht ist, und ein freies Ende (46b), das drehbar an einer Stufenwange (62, 66) angebracht ist, wobei sich die Stufenwange (62, 66) von der Basis (14, 18, 22) allgemein auswärts erstreckt und eine Lagerposition sowie eine Einsatzposition aufweist; und
ein Lageverbindungsglied (54) mit einem ersten Ende (54a), das drehbar an der Basis (18) angebracht ist, und einem zweiten Ende (54b), das drehbar an der Stufenwange (66) angebracht ist;
**gekennzeichnet durch** eine Energiespeichervorrichtung (100) mit ersten und zweiten Enden (104 und 106), wobei das erste Ende (104) der Energiespeichervorrichtung (100) drehbar an dem Lageverbindungsglied (54) angebracht ist, und wobei das zweite Ende (106) der Energiespeichervorrichtung (100) drehbar an der Stufenwange (66) angebracht ist; und
ein gelenkiges Trägerelement (32), das sich zwischen mindestens einem strukturellen Element (56) und einem Ankerhalter (40) erstreckt, einen Abstandshalter nach links und rechts umspannend (26 und 30), entsprechend angebracht an linken und rechten Stufenhaltern (14 und 18).

2. Fahrzeugstufe nach Anspruch 1, wobei der klappbare Standfuß (46) ferner einen Anschlag (46c) umfasst, der an dem ersten Ende des klappbaren Standfußes (46) ausgebildet ist, um eine Rotation des klappbaren Standfußes (46) nach außen über die allgemein vertikale Position zu verhindern, wenn sich die Stufe an der Einsatzposition befindet.

3. Fahrzeugstufe nach Anspruch 1 oder 2, wobei ein Teil der Stufenwange (66) an der Basis (18) anstößt, wenn sich der klappbare Standfuß (46) an der allgemein horizontalen Lagerposition befindet.

4. Fahrzeugstufe nach einem der Ansprüche 1 bis 3, wobei die Stufe ferner einen Stufenträger (38) umfasst, mit einer allgemein planaren Trittfläche (38a), angebracht an der Trittwange (62, 66), wobei der Stufenträger (38) eine Lagerposition und eine Einsatzposition aufweist.

5. Fahrzeugstufe nach Anspruch 4, wobei das Lageverbindungsglied (54) die relative Rotation der Stufenwange (62, 66) so regelt, dass die allgemein planare Trittfläche (38a) in einer horizontalen Ausrichtung gehalten wird, wenn sich der klappbare Standfuß (42, 46) an der allgemein vertikalen Einsatzposition befindet, und wobei sie nach unten und einwärts in einem Winkel angeordnet ist, wenn sich der klappbare Standfuß (42, 46) an der allgemein horizontalen Lagerposition befindet.

6. Fahrzeugstufe nach einem der Ansprüche 1 bis 5, wobei die Stufe ferner einen Verriegelungsmechanismus (70) umfasst, um die Stufenwange (62, 66), den klappbaren Standfuß (42, 46) und den Stufenträger (38) wahlweise an deren entsprechenden Lagerpositionen zu halten.

7. Fahrzeugstufe nach einem der Ansprüche 1 bis 6, wobei die Basis eine Mehrzahl von mit Zwischenabständen angeordneter Halter (14, 18) umfasst, die von zumindest einem strukturellen Element (34) eines Fahrzeugs abhängig sein können, und wobei der klappbare Standfuß (42, 46) und das Lageverbindungsglied (54) an entgegengesetzten inneren Oberflächen der Halter (14, 18) angebracht sind.

8. Motorfahrzeug mit einer Fahrzeugstufeneinheit (10) nach einem der Ansprüche 1 bis 7.

## Revendications

1. Ensemble marche de véhicule (10), comprenant :
une base (14, 18, 22) conçue pour être fixée à au moins un élément structurel (34) d'un véhicule,
un piédestal à charnière (42, 46) pouvant tourner vers l'extérieur et vers le haut d'une position repliée généralement horizontale à une position déployée généralement verticale et ayant une première extrémité montée pivotante à la base (14, 18, 22) et une extrémité libre (46b) fixée pivotante à un limon de marche (62, 66), le limon de marche (62, 66) s'étendant généralement vers l'extérieur à partir de la base (14, 18, 22) et ayant une position repliée et une position déployée, et
une liaison d'orientation (54) ayant une première extrémité (54a) montée pivotante sur la base (18) et une seconde extrémité (54b) montée pivotante sur le limon de marche (66), un élément de support articulé (32) s'étendant entre au moins un élément structurel (56) et un support de liaison (40) enjambant à gauche et à droite un support décalé (26 et 30) monté sur des supports de marche gauche et droit (14 et 18) respectivement, et
**caractérisé par** un dispositif de stockage d'énergie (100) ayant des première et seconde extrémités (104 et 106), la première extrémité (104) du dispositif de stockage d'énergie (100) étant montée pivotante sur la liaison d'orientation (54) et la seconde extrémité (106) du dispositif de stockage d'énergie (100) étant montée pivotante sur le limon de marche (66).

2. Marche de véhicule selon la revendication 1, dans laquelle le piédestal à charnière (46) comprend en outre une butée d'arrêt (46c) formée au niveau de la première extrémité du piédestal à charnière (46) pour empêcher la rotation du piédestal à charnière (46) vers l'extérieur au-delà de la position généralement verticale lorsque la marche est en position déployée.

3. Marche de véhicule selon la revendication 1 ou 2, dans laquelle une partie du limon de marche (66) vient en butée contre la base (18) lorsque le piédestal à charnière (46) est dans la position repliée généralement horizontale.

4. Marche de véhicule selon l'une quelconque des revendications 1 à 3, dans laquelle la marche comprend en outre une poutre de marche (38) ayant une surface de plan de marche généralement plane (38a) fixée au limon de marche (62, 66), la poutre de marche (38) ayant une position repliée et une position déployée.

5. Marche de véhicule selon la revendication 4, dans laquelle la liaison d'orientation (54) commande la rotation relative du limon de marche (62, 66) de sorte que la surface de plan de marche généralement plane (38a) est maintenue dans une orientation horizontale lorsque le piédestal à charnière (42, 46) est dans la position déployée sensiblement verticale et inclinée vers le bas et vers l'intérieur lorsque le piédestal à charnière (42, 46) est dans la position repliée généralement horizontale.

6. Marche de véhicule selon l'une quelconque des revendications 1 à 5, dans laquelle la marche comprend en outre un mécanisme de verrouillage (70) pour maintenir sélectivement le limon de marche (62, 66), le piédestal à charnière (42, 46) et la poutre de marche (38) dans leur position repliée respective.

7. Marche de véhicule selon l'une quelconque des revendications 1 à 6, dans laquelle la base comprend une pluralité de supports espacés (14, 18) conçus pour s'étendre à partir d'au moins un élément structurel (34) d'un véhicule et le piédestal à charnière (42, 46) et la liaison d'orientation (54) sont montés sur des surfaces intérieures opposées des supports (14, 18).

8. Véhicule à moteur ayant un ensemble marche de véhicule (10) selon l'une quelconque des revendications 1 à 7.
